# EUROPEAN PATENT APPLICATION

(11) **EP 2 123 735 A1**
(43) Date of publication of application: **25.11.2009**
(21) Application number: 08711131.6
(22) Date of filing: 12.02.2008
(51) Int. Cl.: C09K 11/08, H01J 9/227

(54) **SURFACE TREATMENT METHOD FOR PHOSPHOR AND METHOD FOR MANUFACTURING FLAT DISPLAY**

(30) Priority: 09.03.2007 JP 2007060662
(71) Applicant: Kabushiki Kaisha Toshiba, Minato-ku Tokyo 105-8001 (JP)
(72) Inventor: ISHII, Keita,, 1-1, Shibaura 1-chome, Minato-ku, Tokyo 105-8001 (JP); AOKI, Katsuyuki, 1-1, Shibaura 1-chome, Minato-ku, Tokyo 105-8001 (JP)
(74) Representative: HOFFMANN EITLE
(86) International application number: PCT/JP2008/052267
(87) International publication number: WO 2008/111350

(57) **Abstract**

An organic acid metal salt is brought into contact with and adhered to phosphor particles, thereby forming phosphor particles each having an organic acid metal salt layer on the surface. When forming a phosphor, layer by using the phosphor particles, sintering is performed, and the organic acid metal salt layer is changed into a metal oxide film.

## Description

### Technical Field

The present invention relates to a method of manufacturing flat display devices such as a plasma display and field emission display, and a method of treating a phosphor to be used in such display devices.

### Background Art

With the advent of the multimedia age, display devices as the core apparatuses of digital networks are required to have large screens, high resolution, and compatibility with various sources such as computers.

Of these display devices, a field emission display (FED) using an electron emitting element such as a field emission cold cathode element is being extensively researched and developed in recent years as a large-screen, flat digital device capable of displaying various kinds of information with high resolution.

The FED has the same basic display principle as that of a cathode ray tube (CRT); the FED emits light by exciting a phosphor by an electron beam. However, the acceleration voltage (excitation voltage) of the electron beam is lower than that of the CRT, and the current density obtained by the electron beam is low. In addition, the irradiation time of the electron beam is as long as a few µs.

When a predetermined luminance life is converted into the input charge amount per unit area, therefore, the input charge amount is larger than that of the CRT. As disclosed in Jpn. Pat. Appln. KOKAI Publication No. 2002-226847, for example, it is presently impossible to obtain a sufficient light emission luminance and sufficient life if a phosphor for the CRT is used.

That is, a demand has arisen for a strong, long-life phosphor capable of maintaining the initial light emission characteristics even when the input charge amount is larger than that of the conventional CRT.

Presently, however, no phosphor superior in light emission characteristics to the conventional CRT phosphor is available for this FED, so it is important to improve the CRT phosphor as an FED phosphor.

### Disclosure of Invention

The present invention has been made in consideration of the above situation, and has as its objects to obtain a high-luminance, long-life flat display phosphor, and provide a method of simply and inexpensively manufacturing a flat display device having a high-luminance, long-life phosphor layer.

A phosphor surface treating method according to the present invention comprises adhering an organic acid metal salt to a phosphor particle by bringing the organic acid metal salt into contact with the phosphor particle to forming a phosphor particle having an organic acid metal salt layer on a surface.

A flat display device manufacturing method according to the present invention comprises:
adhering an organic acid metal salt to phosphor particles in a solution by bringing the organic acid metal salt into contact with the phosphor particles, to prepare a phosphor coating solution containing phosphor particles each having an organic acid metal salt layer on a surface, and forming a phosphor coating layer by applying the phosphor coating solution on a transparent substrate having a light shielding layer having a plurality of frame like or strip patterns;
sintering the phosphor coating layer and burning off an organic component in the organic acid metal salt, to form a phosphor layer containing phosphor particles each having a metal oxide layer on a surface,
and forming a metal back layer on the phosphor layer.

### Brief Description of Drawings

FIG. 1 is a model view showing a phosphor particle having a surface treated by a method according to the present invention;
FIG. 2 is a schematic sectional view showing the way a metal oxide layer is formed on the phosphor particle surface;
FIG. 3 is a perspective view showing an example of an FED as a display device to which a phosphor according to the present invention is applicable;
FIG. 4 is an A - A sectional view of FIG. 3;
FIG. 5 is a model view showing a sample for light emission characteristic measurement;
FIG. 6 is a graph showing the light emission luminance evaluation results of Examples 1 and 2;
FIG. 7 is a graph showing the light emission life evaluation results of Examples 1 and 2;
FIG. 8 is a graph showing the light emission luminance evaluation results of Examples 3 and 4; and
FIG. 9 is a graph showing the light emission life evaluation results of Examples 3 and 4.

### Best Mode for Carrying Out the Invention

In a phosphor surface treating method of the present invention, an organic acid metal salt capable of producing a metal oxide when sintered is brought into contact with and adhered to a phosphor particle, thereby forming a phosphor particle having an organic acid metal salt layer on the surface.

Also, a flat display device manufacturing method of the present invention is an example in which the phosphor surface treating method described above is applied to a flat display device manufacturing method, and comprises adhering an organic acid metal salt to phosphor particles in a solution by bringing the organic acid metal salt into contact with the phosphor particles, thereby preparing a phosphor coating solution containing phosphor particles each having an organic acid metal salt layer on a surface, and forming a phosphor coating layer by applying the phosphor coating solution on a transparent substrate having a light-shielding layer having a plurality of frame-like or strip patterns, sintering the phosphor coating layer and burning off an organic component in the organic acid metal salt, thereby forming a phosphor layer containing phosphor particles each having a metal oxide layer, and forming a metal back layer on the phosphor layer.

The phosphor surface treating method and flat display device manufacturing method described above use a phosphor particle having an organic acid metal salt layer on at least a portion of the surface. This phosphor particle can be used in the formation of a phosphor layer. The obtained phosphor layer undergoes a sintering step after that. In this step, an organic component in the organic acid metal salt is burned off, and the metal is oxidized, so the organic acid metal layer changes into a metal oxide layer after being sintered.

The present invention makes it possible to obtain a high-luminance, long-life phosphor layer by using a phosphor particle having a metal oxide on at least a portion of the surface.

Also, the step of forming phosphor particles each having an organic acid metal salt layer on the surface is simple and inexpensive because the organic acid metal salt and phosphor particles need only be brought into contact with and adhered to each other by stirring them in a solvent or the like.

Furthermore, heating for changing the organic acid metal salt formed on the phosphor particle surface into a metal oxide can be performed simultaneously with the phosphor layer sintering step. This makes it unnecessary to add any heating step, thereby reducing the cost.

Note that it is also possible, if necessary, to change the organic acid metal salt into a metal oxide in a stage before the sintering process by heating the phosphor particles to a temperature equal to or higher than a temperature at which an organic component in the organic acid metal salt is burned off.

As described above, the present invention can inexpensively form a metal oxide layer on the phosphor particle surface by using the organic acid metal salt.

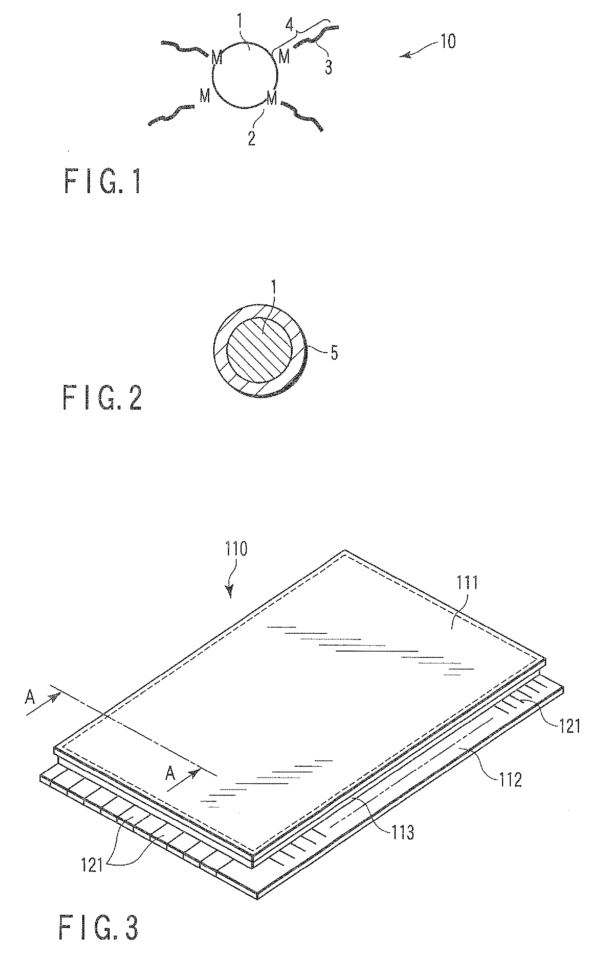

FIG. 1 is a model view showing a phosphor particle having a surface treated by the phosphor surface treating method of the present invention.

In FIG. 1, reference symbol M denotes a metal atom.

As shown in FIG. 1, when phosphor particles 1 are stirred in a solution containing an organic acid metal salt and arbitrary solvent, an organic acid metal salt 4 comes in contact with and adheres to the surface of each phosphor particle 1. In this way, a phosphor 10 having the surface treated by the organic acid metal salt 4 essentially consist of a metal 2 combining with an organic acid 3 is obtained.

FIG. 2 is a schematic sectional view showing the way a metal oxide layer is formed on the phosphor particle surface treated by the present invention.

In sintering, the organic acid 3 is evaporated, and the metal 2 is left behind on the phosphor surface and oxidized by heating, thereby forming a sufficient metal oxide film 5 on the phosphor surface.

The surface treatment is desirably performed by using an organic acid metal salt solution prepared by mixing 0.1 to 5 parts by weight of an organic acid metal salt in 100 parts by weight of an organic acid metal salt solution.

Phosphor particles are put into the prepared solution, and the surface treatment is performed by stirring the solution. In this case, about 1 to 10 parts by weight of the phosphor particles are desirably put into 100 parts by weight of the organic acid metal salt solution.

If the treatment is performed within a range lower than the above range, a satisfactory effect may not be obtained because the amount of organic acid metal salt adhered to the phosphor surface is too small. If the treatment is performed within a range higher than the above range, adhesion may become uneven, or a defect such as incomplete sintering may occur.

The surface of the phosphor particle need not be directly treated with the organic acid metal salt, and it is also possible to mix the organic acid metal salt directly in, e.g., printing ink for printing a phosphor coating layer or coating paste for forming a phosphor coating layer, and perform stirring, printing, and sintering, thereby obtaining a similar metal oxide film. The light emission characteristics can be improved compared to those of a phosphor having no such metal oxide film.

Examples of the phosphor coating layer printing method are ink-jet printing and screen printing. Examples of the phosphor coating layer coating method are electrophoresis using a liquid toner and spin coating.

In the sintering, heating must be performed to a temperature at which an organic acid well evaporates. The temperature is desirably about 400°C to 600°C, although it depends on the type of organic acid. If the temperature is lower than this range, an organic acid cannot completely evaporate, and the light emission luminance or life of the phosphor often deteriorates. If the temperature is higher than this range, heat inflicts damage to the phosphor, and the light emission luminance or life of the phosphor often deteriorates.

When adding the organic acid metal salt to a printing ink, the amount of organic acid metal salt is desirably 0.01 to 50 parts by weight to 100 parts by weight of the phosphor contained in the printing ink. If the treatment is performed outside this range, the light emission luminance or life of the phosphor often deteriorates. Also, the printing performance of the printing ink often deteriorates.

FIG. 3 is a perspective view showing an example of an FED as a display device to which the phosphor according to the present invention is applicable.

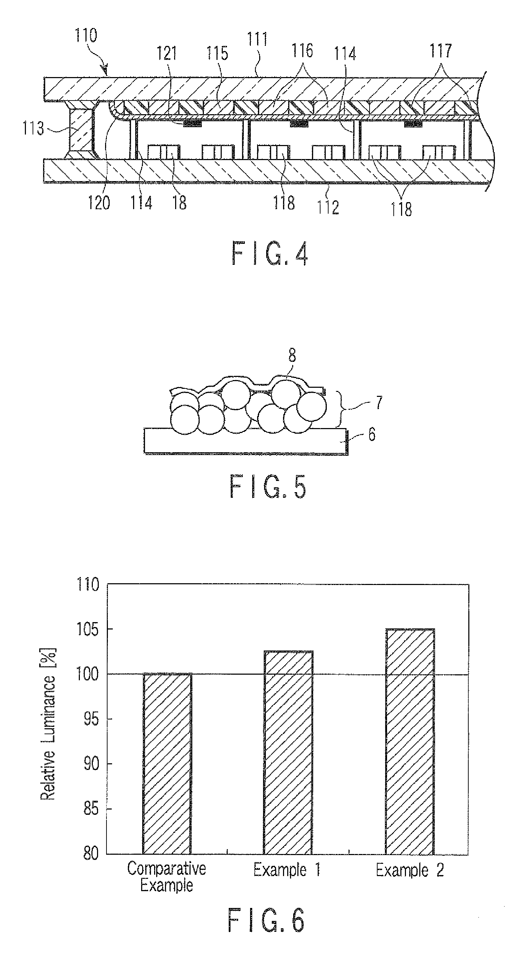

FIG. 4 is an A - A sectional view of FIG. 3.

As shown in FIGS. 3 and 4, this FED comprises a front substrate 111 made of a transparent rectangular glass substrate as an insulating substrate, and a back substrate 112. These substrates oppose each other with a spacing of 1 to 2 mm formed between them. The edges of the front substrate 111 and back substrate 112 are adhered with rectangular, frame-like sidewalls 113 interposed between them, thereby forming a flat rectangular vacuum envelope 110 in which the interior is maintained in a vacuum state.

Spacers 114 are formed inside the vacuum envelope 110 in order to hold the atmospheric pressure load applied to the front substrate 111 and back substrate 112. Plate-like or columnar spacers can be used as the spacers 114.

On the inner surface of the front substrate 111, a phosphor screen 115 having red, green, and blue phosphor layers 116 and matrix light-shielding layers 117 is formed as an image display screen. The phosphor layers 116 may also be formed as strips or dots. A metal back 120 made of an aluminum film or the like is formed on the phosphor screen 115. In addition, a getter film 121 for lowering the internal pressure of the vacuum envelope 110 is formed to adsorb internal unnecessary gases.

The front substrate is formed by, e.g., the following method.

A surface treatment is performed by adhering an organic acid metal salt to phosphor particles in a solution by bringing them into contact with each other by stirring or the like, thereby preparing a phosphor coating solution containing the phosphor particles each having an organic acid metal salt layer on the surface. A phosphor coating layer is formed by applying the phosphor coating solution on a transparent substrate having a light-shielding layer having a plurality of frame-like or strip patterns. While the phosphor coating layer is dried and sintered, an organic component in the organic acid metal salt is burned off, and a metal component in the organic acid metal salt is oxidized, thereby forming a phosphor layer containing the phosphor particles each having a metal oxide layer. The front substrate is obtained by forming a metal back layer on the phosphor layer.

On the inner surface of the back substrate 112, a large number of surface conduction type electron emitting elements 118 for emitting electron beams are formed as electron sources that excite the phosphor layers 116 of the phosphor screen 115. The electron emitting elements 118 are arranged into rows and columns in one-to-one correspondence with pixels. Each electron emitting element 118 comprises an electron emitting portion (not shown), a pair of element electrodes that apply a voltage to the electron emitting portion, and the like. A large number of lines 121 for supplying an electric potential to the electron emitting elements 118 are also formed in a matrix on the inner surface of the back substrate 112. The end portions of the lines 121 are extracted outside the vacuum envelope 110.

When displaying an image on this FED, an anode voltage is applied to the phosphor screen 115 and metal back 120, and electron beams emitted from the electron emitting elements 118 collide with the phosphor screen after being accelerated by the anode voltage. The phosphor layers 116 of the phosphor screen 115 emit light as they are excited by the electron beams, thereby displaying a color image.

Examples of the organic acid metal salt usable in the present invention are octylic acid Mg, octylic acid Ca, octylic acid Sr, octylic acid Ba, octylic acid Y, octylic acid La, octylic acid Gd, dodecylbenzenesulfonic acid Mg, and dodecylbenzenesulfonic acid Ca.

Examples of the phosphor usable in the present invention are Y₂O₃:Eu:YVO₄:Eu, (Y, Gd)BO₃:Eu, Y₂O₂S:Eu, γ-Zn₃(PO₄)₂:Mn, (ZnCd)S:Ag + InO (the foregoing are red), Zn₂GeO₂:Mn, BaAl₁₂O₁₉Mn, Zn₂SiO₄:Mn, LaPO₄:Tb, ZnS:(Cu, Al), ZnS:(Au, Cu, Al), (ZnCd)S:(Cu, Al), Zn₂SiO₄:(Mn, As), Y₃Al₅O₁₂:Ce, Gd₂O₂S:Tb, Y₃Al₅O₁₂:Tb, ZnO:Zn (the foregoing are green), Sr₅(PO₄)₃CI:Eu, BaMgAl₁₄O₂₃:Eu, BaMgAl₁₆O₂₇:Eu, ZnS:(Ag, Al), ZnS:(Ag, Cl), and Y₂SiO₃:Ce (the foregoing are blue).

Examples of the solvent used in the surface treating method of the present invention are aliphatic hydrocarbons such as n-pentane, hexane, and heptane, alicyclic hydrocarbons such as cyclopentane and cyclohexane, halogenated hydrocarbon solvents such as chlorinated alkane, fluorinated alkane, and chlorofluorocarbon, silicone oils, and mixtures of these solvents. Preferably, branched paraffin solvent mixtures such as Isopar G (registered trademark), Isopar H (registered trademark), Isopar K (registered trademark), Isopar L (registered trademark), Isobar M (registered trademark), and Isopar V (registered trademark), manufactured by Exxon Corporation, are used.

The present invention will be explained in more detail below by way of examples.

### Examples

### Example 1

### Formation of Sample for Measuring Light Emission Characteristics

10g of an 8-wt% solution of octylic acid La manufactured by NIHON KAGAKU SANGYO was added to 490g of Isopar L (registered trademark) manufactured by Exxon, and the mixture was stirred for 30 min by a stirrer, thereby obtaining an octylic acid La solution. 50g of a ZnS:Ag,Al blue emitting phosphor was added to the octylic acid La solution, and the mixture was stirred for 2 hrs by the stirrer, thereby performing a surface treatment by which octylic acid La was adhered to the surface of the ZS:Ag,Al phosphor.

31.25g of the surface-treated ZnS:Ag,Al phosphor and 18.75g of an ethylcellulose resin for screen printing were stirred by the stirrer, thereby preparing screen printing paste weighing 50g.

FIG. 5 is a model view showing a sample for measuring the light emission characteristics.

The screen printing paste prepared as described above was used to form a phosphor layer 7 about 10 µm thick on a glass substrate 6 (100 mm x 100 mm) by screen printing. A metal back layer 8 about 120 nm thick was formed on the upper surface of the phosphor layer 7 by vapor deposition of Al, and annealing was performed at 500°C for 30 min, thereby forming a sample for measuring the light emission characteristics as shown in FIG. 5.

### Evaluation of Light Emission Luminance and Light Emission Life

The light emission luminance and light emission life were evaluated by irradiating an electron beam at an acceleration voltage of 10 kV and a current density of 0.36A/mm² (electric current = 250 µA, and raster size = 10 mm x 70 mm) at the sample shown in FIG. 5, to make the phosphor contained therein emit light. A spectral radiometer used in the light emission evaluation was SR-3A, manufactured by TOPCON

### TECHNOHOUSE.

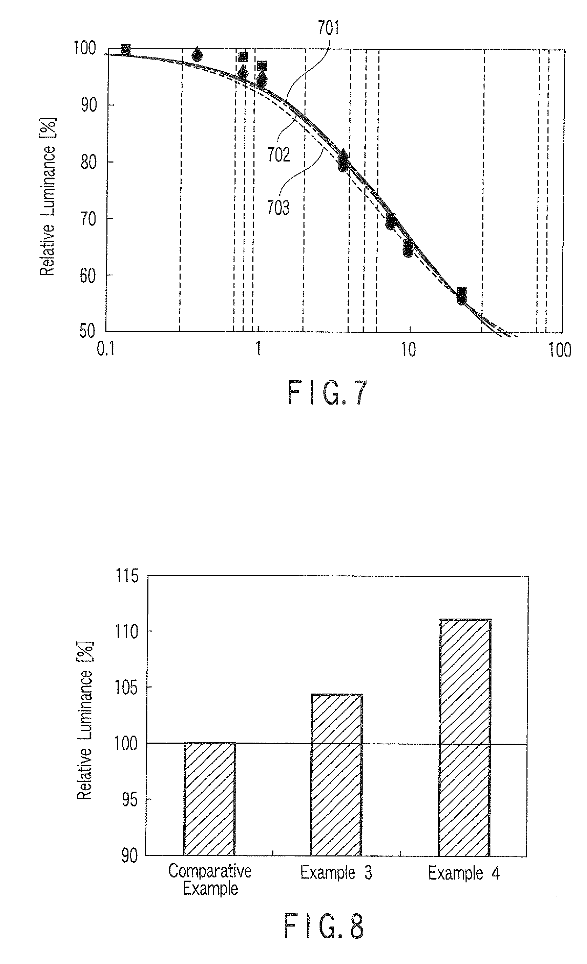

FIGS. 6 and 7 show the evaluation results of the light emission luminance and light emission life.

### Comparative Example

A comparative sample for measuring the light emission characteristics was formed following the same procedures as above except that no octylic acid La was adhered to the ZnS:Ag,Al phosphor surface, and the light emission luminance and light emission life were evaluated.

### Example 2

20g of a 3-wt% solution of octylic acid Mg manufactured by NIHON KAGAKU SANGYO was added to 480g of Isopar L (registered trademark) manufactured by Exxon, and the mixture was stirred for 30 min by a stirrer, thereby obtaining an octylic acid Mg solution. 50g of a ZnS:Ag,Al blue phosphor was added to the octylic acid Mg solution, and the mixture was stirred for 2 hrs by the stirrer, thereby performing a surface treatment by which octylic acid Mg was adhered to the surface of the ZnS:Ag,Al phosphor.

31.25g of the surface-treated ZnS:Ag,Al phosphor and 18.75g of an ethylcellulose resin for screen printing were stirred by the stirrer, thereby preparing a screen printing paste weighing 50g.

The screen printing paste prepared as described above was used to form a phosphor layer 7 about 10 µm thick on a glass substrate 6 (100 mm x 100 mm) by screen printing. A metal back layer 8 about 120 nm thick was formed on the upper surface of the phosphor layer 7 by vapor deposition of Al, and annealing was performed at 500°C for 30 min, thereby forming a sample for measuring the light emission characteristics as shown in FIG. 5.

The light emission luminance and light emission life were evaluated by irradiating an electron beam at an acceleration voltage of 10 kV and a current density of 3.6 mA/cm² (electric current = 250 µA, and raster size = 10 mm x 70 mm) at the sample shown in FIG. 5, to make the phosphor contained therein emit light. A spectral radiometer used in the light emission evaluation was SR-3A manufactured by TOPCON TECHNOHOUSE.

FIGS. 6 and 7 show the evaluation results of the light emission luminance and light emission life.

Note that in FIG. 7, curves 701, 702, and 703 respectively indicate the light emission lives of Example 1, Example 2, and the comparative example.

As shown in FIG. 6, the light emission luminance of the sample of Example 1 was higher by about 2.5% than that of the sample of the comparative example in which no surface treatment was performed.

Also, when the light emission life is defined as a dose when the maintaining ratio (a relative intensity when the initial peak intensity is 100%) of the peak intensity of a light emission spectrum is 70% the life of Example 1 was about 1.15 times that of the comparative example.

As shown in FIG. 6, the light emission luminance of the sample of Example 2 was higher by about 5% than that of the sample of the comparative example.

Also, when the light emission life of the sample of Example 2 is defined as a dose when the maintaining ratio (a relative intensity when the initial peak intensity is 100%) of the peak intensity of a light emission spectrum is 70%, the life of Example 2 was about 1.15 times that of the comparative example.

### Example 3

31.25g of a ZnS:Ag,Al phosphor, 15.13g of an ethylcellulose resin for screen printing, and 3.12g of an 8-wt% solution of octylic acid La manufactured by NIHON KAGAKU SANGYO were mixed, and the mixture was stirred by a stirrer, thereby preparing screen printing paste weighing 50g.

The screen printing paste prepared as described above was used to form a phosphor layer 7 about 10 µm thick on a glass substrate 6 (100 mm x 100 mm) by screen printing. A metal back layer 8 about 120 nm thick was formed on the upper surface of the phosphor layer 7 by vapor deposition of Al, and annealing was performed at 500°C for 30 min, thereby forming a sample for measuring the light emission characteristics as shown in FIG. 5.

The light emission luminance and light emission life were evaluated by irradiating an electron beam at an acceleration voltage of 10 kV and a current density of 3.6 mA/cm² (electric current = 250 µA, and raster size = 10 mm x 70 mm) at the sample shown in FIG. 5, to make the phosphor contained therein emit light. A spectral radiometer used in the light emission evaluation was SR-3A manufactured by TOPCON TECHNOHOUSE.

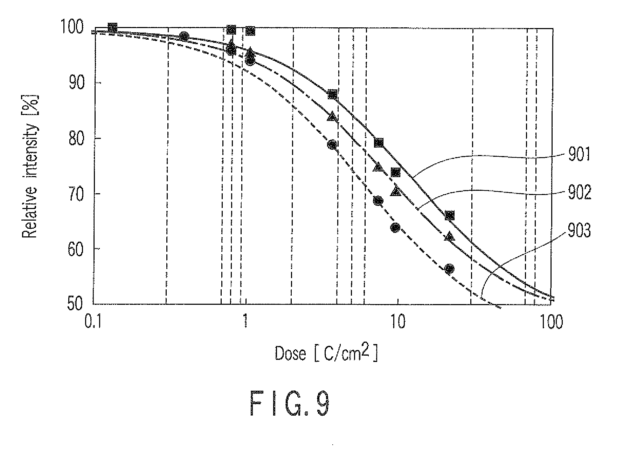

FIGS. 8 and 9 show the evaluation results of the light emission luminance and light emission life.

### Example 4

31.25g of a ZnS:Ag,Al phosphor, 15.13g of an ethylcellulose resin for screen printing, and 3.12g of octylic acid Mg manufactured by NIHON KAGAKU SANGYO were mixed, and the mixture was stirred by a stirrer, thereby preparing screen printing paste weighing 50g.

The screen printing paste prepared as described above was used to form a phosphor layer 7 about 10 µm thick on a glass substrate 6 (100 mm x 100 mm) by screen printing. A metal back layer 8 about 120 nm thick was formed on the upper surface of the phosphor layer 7 by vapor deposition of Al, and annealing was performed at 500°C for 30 min, thereby forming a sample for measuring the light emission characteristics as shown in FIG. 5.

The light emission luminance and light emission life were evaluated by irradiating an electron beam at an acceleration voltage of 10 kV and a current density of 3.6 mA/cm² (electric current = 250 µA, and raster size = 10 mm x 70 mm) at the sample shown in FIG. 5, to make the phosphor contained therein emit light. A spectral radiometer used in the light emission evaluation was SR-3A manufactured by TOPCON TECHNOHOUSE.

FIGS. 8 and 9 show the evaluation results of the light emission luminance and light emission life.

Note that in FIG. 9, curves 901, 902, and 903 respectively indicate the light emission lives of Example 3, Example 4, and the comparative example.

As shown in FIG. 8, the light emission luminance of the sample according to Example 3 was higher by about 4.5% than that of the sample of the comparative example.

Also, when the light emission life of the sample according to Example 3 is defined as a dose when the maintaining ratio (a relative intensity when the initial peak intensity is 100%) of the peak intensity of a light emission spectrum is 70%, the life of Example 3 was about 2.1 times that of the comparative example.

As shown in FIG. 8, the light emission luminance of the sample of Example 4 was higher by about 11% than that of the sample of the comparative example (a phosphor having an untreated surface).

Also, as shown in FIG. 9, when the light emission life of the sample of Example 4 is defined as a dose when the maintaining ratio (a relative intensity when the initial peak intensity is 100%) of the peak intensity of a light emission spectrum is 70%, the life of Example 4 was about 1.5 times that of the comparative example.

## Claims

1. A phosphor surface treating method **characterized by** comprising adhering an organic acid metal salt to a phosphor particle by bringing the organic acid metal salt into contact with the phosphor particle to forming a phosphor particle having an organic acid metal salt layer on a surface.

2. A phosphor surface treating method according to claim 1, **characterized in that** a metal used in the organic acid metal salt is selected from the group consisting of magnesium, calcium, strontium, barium, yttrium, lanthanum, and gadolinium.

3. A phosphor surface treating method according to claim 1, **characterized in that** an organic acid used in the organic acid metal salt is selected from the group consisting of octylic acid, lauric acid, stearic acid, oleic acid, naphthenic acid, and dodecylbenzenesulfonic acid.

4. A phosphor surface treating method according to claim 1, **characterized by** further comprising heating the phosphor particle having the organic acid metal salt layer at a temperature not less than a temperature at which an organic acid component is burned off, to forming a phosphor particle having a metal oxide layer on a surface.

5. A flat display device manufacturing method **characterized by** comprising:
adhering an organic acid metal salt to phosphor particles in a solution by bringing the organic acid metal salt into contact with the phosphor particles, to prepare a phosphor coating solution containing phosphor particles each having an organic acid metal salt layer on a surface, and forming a phosphor coating layer by applying the phosphor coating solution on a transparent substrate having a light-shielding layer having a plurality of frame-like or strip patterns;
sintering the phosphor coating layer and burning off an organic component in the organic acid metal salt, to form a phosphor layer containing phosphor particles each having a metal oxide layer on a surface,
and forming a metal back layer on the phosphor layer.

6. A flat display device manufacturing method according to claim 5, **characterized in that** the phosphor coating solution further contains a binder resin, and a method of forming the phosphor layer is selected from the group consisting of ink-jet printing, screen printing, liquid toner, and spin coating.

7. A flat display device manufacturing method according to claim 5, **characterized in that** a metal used in the organic acid metal salt is selected from the group consisting of magnesium, calcium, strontium, barium, yttrium, lanthanum, and gadolinium.

8. A flat display device manufacturing method according to claim 5, **characterized in that** an organic acid used in the organic acid metal salt is selected from the group consisting of octylic acid, lauric acid, stearic acid, oleic acid, naphthenic acid, and dodecylbenzenesulfonic acid.
